# EUROPEAN PATENT SPECIFICATION

(11) **EP 4 496 164 B1**
(45) Date of publication and mention of the grant of the patent: **20.05.2026**
(21) Application number: 22931795.3
(22) Date of filing: 16.11.2022
(51) Int. Cl.: B60M 3/00, H02J 3/06, H02J 13/00

(54) **TRACTION NETWORK BILATERAL POWER SUPPLY RIDE-THROUGH POWER UTILIZATION SYSTEM, AND CONTROL METHOD**
TRAKTIONSNETZ MIT BILATERALEM STROMVERSORGUNGS-DURCHLAUFLEISTUNGSNUTZUNGSSYSTEM UND STEUERUNGSVERFAHREN
SYSTÈME D'UTILISATION DE PUISSANCE DE MAINTIEN D'ALIMENTATION ÉLECTRIQUE BILATÉRALE DE RÉSEAU DE TRACTION, ET PROCÉDÉ DE COMMANDE

(30) Priority: 17.03.2022 CN 202210261871
(43) Date of publication of application: 22.01.2025
(73) Proprietor: Southwest Jiaotong University, Sichuan 610031 (CN)
(72) Inventor: LI, Qunzhan, Chengdu, Sichuan 610031 (CN); HUANG, Xiaohong, Chengdu, Sichuan 610031 (CN); WU, Bo, Chengdu, Sichuan 610200 (CN); YANG, Naiqi, Chengdu, Sichuan 611756 (CN)
(74) Representative: SSM Sandmair
(86) International application number: PCT/CN2022/132262
(87) International publication number: WO 2023/173783

(56) References cited:
- EP-A1- 1 892 141
- CN-A- 110 729 731
- CN-A- 111 422 104
- CN-A- 112 848 976
- CN-A- 112 848 976
- CN-A- 114 336 642
- RU-C1- 2 766 919
- WANG FANG ET AL: "Research on Bilateral Power Supply Technology of Electrified Railway", 2020 ASIA ENERGY AND ELECTRICAL ENGINEERING SYMPOSIUM (AEEES), IEEE, 29 May 2020 (2020-05-29), pages 311 - 317, XP033783419, DOI: 10.1109/AEEES48850.2020.9121515

## Description

### Cross Reference to Related Applications

This application claims the benefit of Chinese Patent Application 202210261871.3, filed on March 17, 2022, the contents of which are incorporated herein by reference.

### Field of the Invention

The present invention relates to the technical field of AC electrified railway traction power supply, and in particular to a traction network two-way feeding power supply ride-through power utilization system, and a control method.

### Background of the Invention

Electrified railway electrical phase separation is a notable weak link with the entire traction power supply system. The neutral section of the electrical phase separation forms a dead zone, resulting in a disruption to the power supply. Although the dead zone of the neural section typically spans only a few tens of meters, the distance over which power is cut off as trains automatically pass through this section can exceed 500 meters. This significantly impedes the smooth operation of trains and can even cause them to stall on slopes, potentially leading to accidents. Implementing a two-way feeding power supply system in electrified railway eliminates the electrical phase separation within these sections, thereby removing the dead zone and ensuring an uninterrupted power supply of trains. This also eliminates the risks associated with passing through these neutral sections. The two-way feeding power supply system boasts several advantages, including high reliability of power supply, improved network voltage level, increased power capacity, and reduced power losses, enhancing both the efficiency and safety of the railway system. The document CN 112 848 976 A describes a two-way traction power supply system based on the deep integration of an electric network, an energy network and an information network.

Usually, the traction network with two-way feeding system forms a parallel structure with the power grid through traction substations on both sides. When the traction network is in a no-load condition, there are power and current flowing through the traction network, and the corresponding power is referred to as the ride-through power (with the corresponding current being known as the balanced current). At this time, the ride-through power flows in from one traction substation and flows out from the other. In other words, the traction substation where the ride-through power flows into the traction network from the power grid is in a load (power consumption) state, and the traction substation where the ride-through power flows into the power grid from the traction network is in a power generation state. It is precisely because two-way feeding system alters the power grid structure that two key technical problems need to be solved for its implementation.

The first problem is the relay protection of both the power grid and the traction network. It requires the relay protection to have a larger protection range and the capability of jumping the traction network to block power flow transmission in response to power grid faults. This can be solved completely by equipping the power grid with transmission line protection and the traction network with sectioning protection.

The second problem is the influence of the ride-through power on the power grid and metering. If the ride-through power is returned to the power grid, it is equivalent to the power generation of the traction substation. If the returned power is metered in reverse, that is to say, it will be treated as power generation and offset with the power consumption of another traction substation, then there will be no economic loss for the user. If the ride-through power is returned to the power grid, the returned power is not metered or is metered in positive, it will result in economic losses for the user. In this case, it is necessary to research methods for reducing the ride-through power in two-way feeding power supply system, or ways to make use of the ride-through power, so as to leverage the advantages of two-way feeding power supply system while minimizing its impact on the power grid and users, and ultimately improving power consumption efficiency.

Considering that the crux of the problem of two-way feeding power supply ride-through power lies in the challenge of the power returned to the grid, a technology for utilizing the two-way feeding ride-through power in the electrified railway traction network is proposed. This technology eliminates the electrical phase separation in the section, removes the dead zone, and converts the ride-through power into available power and electric energy, ensuring that the power returned to the power grid meets the requirements or even reaches 0.

### Summary of the Invention

A first object of the present invention is to provide a traction network two-way feeding power supply ride-through power utilization system that can effectively solve utilization of the ride-through power existing between a substation TSa and a substation TSb so that the ride-through power returned to the power grid meets a preset requirement.

The present invention is achieved by the following technical means:
A traction network two-way feeding power supply ride-through power utilization system, including:
a power conversion device BCSa and a controller CCa that are arranged at a traction substation TSa, wherein the power conversion device BCSa is connected with a traction bus TSBa through an AC port Ja; the traction bus TSBa is provided with a voltage transformer PTa, a traction feeder Fal and a traction feeder Fa2 are provided with a current transformer CTa1 and a current transformer CTa2, respectively; measuring terminals of the voltage transformer PTa, the current transformer CTa1, and the current transformer CTa2 are connected with an input terminal of the controller CCa;
a power conversion device BCSb and a controller CCb that are arranged at a traction substation TSb, wherein the power conversion device BCSb is connected with a traction bus TSBb through an AC port Jb; the traction bus TSBb is provided with a voltage transformer PTb, a traction feeder Fb1 and a traction feeder Fb2 are provided with a current transformer CTb1 and a current transformer CTb2, respectively; measuring terminals of the voltage transformer PTb, the current transformer CTb1, and the current transformer CTb2 are connected with an input terminal of the controller CCb; and
the controller CCa and the controller CCb are connected via an optical fiber pair OFL and perform information exchange, wherein the traction network OCS between the traction substation TSa and the traction substation TSb uses two-way feeding power supply; the controller CCa is used for acquiring power information of the substation TSa in real time, and the controller CCb is used for acquiring power information of the substation TSb in real time; on the basis of the result of the information exchange, the controller CCa and the controller CCb control the power conversion device BCSa and the power conversion devices BCSb respectively to use ride-through power, such that ride-through power returned to the power grid from the traction substation TSa or from the traction substation TSb meets a preset requirement.

Further, the traction substation TSa uses in-phase power supply, and the traction bus TSBa of the traction substation TSA supplies power to the traction network OCS via the traction feeder Fa1, and supplies power to traction network OCSa of a left adjacent supply section via the traction feeder Fa2, and the traction network OCS is connected with the traction network OCSa of the left adjacent supply section via a sectionalizer.

Further, the traction substation TSb uses in-phase power supply, the traction bus TSBb of the traction substation TSb supplies power to the traction network OCS via the traction feeder Fb1 and to a traction network OCSb of a right adjacent power section via the traction feeder Fb2, and the traction network OCS is connected with the traction network OCSb of the right adjacent power section via a sectionalizer.

Further, the power conversion device BCSa includes a rectifier device ADCa and an inverter device DACa, a DC side of the rectifier device ADCa is connected with DC sides of an energy storage device ESDa and the inverter device DACa via a common DC bus DCBa, a three-phase AC side of the inverter device DACa is connected with a power distribution system bus DSBa of the traction substation TSa, and an output terminal of the controller CCa is connected with a control terminal of the power conversion device BCSa.

Further, the power conversion device BCSb includes a rectifier device ADCb and an inverter device DACb, a DC side of the rectifier device ADCb is connected with DC sides of an energy storage device ESDb and the inverter device DACb via a common DC bus DCBb, a three-phase AC side of the inverter device DACb is connected with a power distribution system bus DSBb of the traction substation TSb, and an output terminal of the controller CCb is connected with a control terminal of the power conversion device BCSb.

Another object of the present invention is to provide control method of the traction network two-way feeding power supply ride-through power utilization system, including:
acquiring real-time power information of traction substations TSa and TSb, respectively by controllers CCa and CCb;
performing information exchange according to the respective acquired real-time power information by the controllers CCa and CCb; and
controlling a power conversion device BCSa to use ride-through power according to the result of the information exchange by the controller CCa, and controlling a power conversion device BCSb to use ride-through power according to the result of the information exchange by the controller CCb, so that the ride-through power returned to the power grid from the traction substation TSa or the ride-through power returned to the power grid from the traction substation TSb meets a preset requirement.

Further, the traction substations TSa and TSb are supplied with in-phase power, and in the method:
acquiring the real-time power information of the traction substation TSa by the controller CCa includes: detecting in real time the voltage Ua of the traction bus TSBa, the current Ia1 of the traction feeder Fa1, and the current Ia2 of the traction feeder Fa2 by the controller CCa; calculating, according to the voltage Ua of the traction bus TSBa and the current Ia1 of the traction feeder Fa1, the active power Pca provided by the traction substation TSa to the traction network OCS by the controller CCa; calculating, according to the voltage Ua of the traction bus TSBa and the current Ia2 of the traction feeder Fa2, the active power Pcaa provided by the traction substation TSa to the traction network OCSa of the left adjacent supply section by the controller CCa;
acquiring the real-time power information of the traction substation TSb by the controller CCb includes: detecting in real time the voltage Ub of the traction bus TSBb, the current Ib1 of the traction feeder Fb1, and the current Ib2 of the traction feeder Fb2 by the controller CCb; calculating, according to the voltage Ub of the traction bus TSBb and the current Ib1 of the traction feeder Fb1, the active power Pcb provided by the traction substation TSb to the traction network OCS by the controller CCb; calculating, according to the voltage Ub of the traction bus TSBb and the current Ib2 of the traction feeder Fb2, the active power Pcbb provided by the traction substation TSb to the traction network OCSb of the right adjacent supply section by the controller CCb;
wherein, the power flowing from the traction substation to the traction network is positive and the power flowing from the traction network to the traction substation is negative.

Further, performing information exchange according to the respective acquired real-time power information by the controllers CCa and CCb includes: sending active power Pca and active power Pcaa data to the controller CCb via the optical fiber pair OFL by the controller CCa, and sending active power Pcb and active power Pcbb data to the controller CCa via the fiber pair OFL by the controller CCb.

Further, controlling the power conversion device BCSa to use the ride-through power according to the result of the information exchange by the controller CCa, and controlling the power conversion device BCSb to use the ride-through power according to the result of the information exchange by the controller CCb, so that the ride-through power returned to the power grid from the traction substation TSa or the ride-through power returned to the power grid from the traction substation TSb meets a preset requirement includes:
if Pca > 0 and Pcb < 0 and, Pca + Pcb = 0, determining, by the controllers CCa and CCb, that the traction network OCS is in a no-load condition, the active power Pca and the active power Pcb being ride-through power and flowing from the traction feeder Fal to the traction feeder Fb1, at this time: if the active power Pca ≥ Pcbb ≥ 0, controlling, by the controller CCb, the power conversion device BCSb to supply power to the power distribution system bus DSBb or to operate the energy storage device ESDb in an energy storage state, the power sum of both being equal to Pca-Pcbb, while controlling, by the controller CCa, the power conversion device BCSa to standby; if the active power Pcbb ≥ Pca, controlling, by the controller CCb, the power conversion device BCSb to standby, while controlling, by the controller CCa, the power conversion device BCSa to standby;
if Pcb > 0 and Pca < 0 and, Pca + Pcb = 0, determining, by the controllers CCa and CCb, that the traction network OCS is in a no-load condition, the active power Pca and the active power Pcb being ride-through power and flowing from the traction feeder Fb1 to the traction feeder Fa1, at this time: if the active power Pcb ≥ Pcaa ≥ 0, controlling, by the controller CCa, the power conversion device BCSa to supply power to the power distribution system bus DSBa or to operate the energy storage device ESDa in an energy storage state, the power sum of both being equal to Pcb-Pcaa, while controlling, by the controller CCb, the power conversion device BCSb to standby; if the active power Pcaa ≥ Pcb, controlling, by the controller CCa, the power conversion device BCSa to standby, while controlling, by the controller CCb, the power conversion device BCSb to standby; and
if |Pca + Pcb| > 0, and Pca > 0 and Pcb > 0, determining, by the controllers CCa and CCb, that the traction network OCS is in a traction condition, controlling, by the controller CCa, the power conversion device BCSa to operate the energy storage device ESDa in a discharged state with a discharge power of the energy storage device ESDa being less or equal to Pca, while controlling, by the controller CCb, the power conversion device BCSb to operate the energy storage device ESDb in a discharged state with a discharge power of the energy storage device ESDb being less or equal to Pcb.

Further, controlling the power conversion device BCSa to use the ride-through power according to the result of the information exchange by the controller CCa, and controlling the power conversion device BCSb to use the ride-through power according to the result of the information exchange by the controller CCb, so that the ride-through power returned to the power grid from the traction substation TSa or the ride-through power returned to the power grid from the traction substation TSb meets a preset requirement further includes:
if Pca < 0 and Pcb < 0, determining, by the controllers CCa and CCb, that the traction network OCS is in a braking condition, at this time:
if Pcaa < 0, controlling, by the controller CCa, the power conversion device BCSa to supply power to the power distribution system bus DSBa or to operate the energy storage device ESDa in an energy storage state, the power sum of both being equal to |Pca| + |Pcaa|; if Pcaa > 0 and Pcaa < |Pca|, controlling, by the controller CCa, the power conversion device BCSa to supply power to the power distribution system bus DSBa or to operate the energy storage device ESDa in an energy storage state, the power sum of both being equal to |Pca|-|Pcaa|; if Pcaa > 0 and Pcaa ≥ |Pca|, controlling, by the controller CCa, the power conversion device BCSa to standby; and
if Pcbb < 0, controlling, by the controller CCb, the power conversion device BCSb to supply power to the power distribution system bus DSBb or to operate the energy storage device ESDb in an energy storage state, the power sum of both being equal to |Pcb| + |Pcbb|; if Pcbb > 0 and Pcbb < |Pcb|, controlling, by the controller CCb, the power conversion device BCSb to supply power to the power distribution system bus DSBb or to operate the energy storage device ESDb in an energy storage state, the power sum of both being equal to |Pcb|-|Pcbb|; if Pcbb > 0 and Pcbb ≥ |Pcb|, controlling, by the controller CCb, the power conversion device BCSb to standby.

The working principle of the invention is that under normal circumstances, the two-way feeding power supply traction network forms a parallel structure with the power grid. When the traction network is in a no-load condition, a part of the power transmitted by the power grid will flow through the traction network, and the corresponding power is referred to as the ride-through power (with the corresponding current being known as the balanced current). Additionally, there are charging currents and charging powers arising from the distributed capacitance of the transmission line and the traction network. The ride-through power flows along the traction network, belonging to the longitudinal component, while the charging power, like a load, is called the transverse component. When the traction network is in a no-load condition, the ride-through situation can be reflected by measuring the active component of the ride-through power, and the active component can be measured at the incoming line of the traction substation, the traction feeder and any convenient part of the traction network. The in-phase power supply of the traction substation and the two-way feeding power supply of the traction network are equivalent to extending the power supply arm, allowing the traction train in the same train to absorb the regenerative power of the braking train with a greater probability, thereby significantly reducing the regenerative power returned to the power grid, possibly down to 0. If the traction load generates a large transverse component, which is equal to or greater than the ride-through power value returned to the power grid, it only shows the transverse component effect, which is referred to as the equivalent traction condition. If the load of the traction network is under the regenerative braking condition, the regenerative braking energy generated is first consumed by adjacent power supply sections, and the excess regenerative energy will be fed back to the power grid through the traction substation. Using the voltage and current information of two traction substations with two-way feeding power supply, the operating condition of the traction network in a two-way feeding power supply interval is judged: under the no-load condition, the ride-through power is stored in an energy storage device or converted to a substation self-power system through the power conversion device, so that the ride-through power returned to the power grid meets the preset requirement. Under the traction condition (or the equivalent traction condition), the energy storage device releases energy for train use. Under the regenerative braking condition (there is also ride-through power), the regenerative power and ride-through power are stored in the energy storage device or converted to the substation self-power system through the power conversion device, so that the power returned to the power grid meets the preset requirement.

Compared with the prior art, the beneficial effects of the present invention are:
First, without changing the power supply structure of the power grid to the railway, the invention enables the utilization of the ride-through power of the traction network, eliminates the negative impact of the ride-through power on the power grid and users, and fully leverages the advantages of two-way feeding power supply.

Second, implementing two-way feeding power supply on the basis of in-phase power supply is more conducive to the utilization of regenerative energy of the power supply arm, improving the direct utilization rate of regenerative braking energy. Under normal circumstances, the regenerative power and electric energy returned to the power grid can meet the preset requirement or is even reduced to 0.

Third, the power conversion device can be connected with the energy storage device of the traction substation and the power distribution system for power supply. Besides using the ride-through power, it can also use the remaining regenerative braking electric energy.

Four, the technology is advanced, reliable, and easy to implement.

The invention is defined by the appended claims.

### Brief Description of Drawings

The accompanying drawings are included to provide a further understanding of embodiments of the invention and constitute a part of this specification, and together with the following detailed description, serve to explain the embodiments of the invention, but are not to limit the embodiments of the invention.
FIG. 1 is a schematic diagram of the connection relationship between two-way feeding power supply and the power grid of the present invention.
FIG. 2 is a schematic structural diagram of the present invention.
FIG. 3 is a schematic structural diagram of the power conversion device BCSa of the present invention.
FIG. 4 is a schematic structural diagram of the power conversion device BCSb of the present invention.
FIG. 5 is a flowchart of the control method of the present invention.

### Detailed Description of the Embodiments

In order for those skilled in the art to better understand the technical solutions of the present invention, the present invention is further described below with reference to the accompanying drawings and the detailed embodiments.

### Example 1

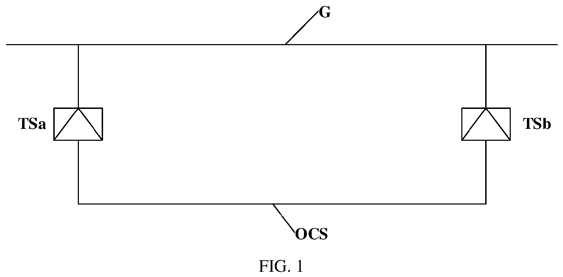

The single-line schematic diagram of the connection relationship between two-way feeding power supply and the power grid is shown in FIG. 1. The traction network OCS of two-way feeding power supply forms a parallel structure with the power grid G through the traction substations TSa and TSb on both sides. According to the principle of parallel shunt, two-way feeding power supply will produce a current component parallel to the power grid G in the traction network OCS, which is called balanced current, and produce ride-through power, which will affect the railway electricity charging problem. The problem can be solved well if the electricity charging of the primary sides of two substations with two-way feeding power supply adopts the way of reverse metering of returned power. It will become an extra burden for the railway if the way of no metering of returned power or the way of positive metering of returned power is adopted.

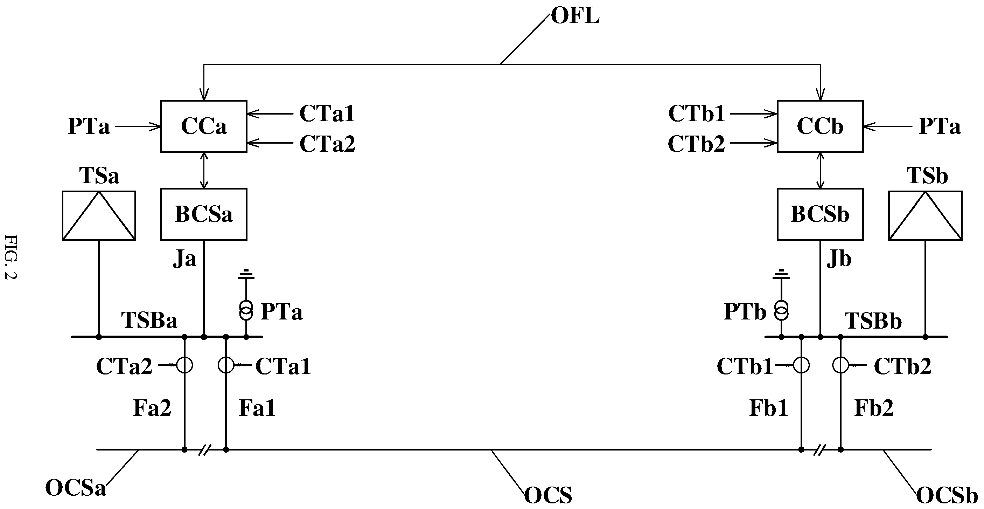

To this end, as shown in FIG. 2, the present example provides traction network two-way feeding power supply ride-through power utilization system, including: a power conversion device BCSa and a controller CCa that are arranged at a traction substation TSa, wherein the power conversion device BCSa is connected with a traction bus TSBa via an AC port Ja; the traction bus TSBa is provided with a voltage transformer PTa, a traction feeder Fal and a traction feeder Fa2 are provided with a current transformer CTa1 and a current transformer CTa2, respectively; measuring terminals of the voltage transformer PTa, the current transformer CTa1, and the current transformer CTa2 are connected with an input terminal of the controller CCa;
a power conversion device BCSb and a controller CCb that are arranged at a traction substation TSb, wherein the power conversion device BCSb is connected with a traction bus TSBb via an AC port Jb; the traction bus TSBb is provided with a voltage transformer PTb, a traction feeder Fb1 and a traction feeder Fb2 are provided with a current transformer CTb1 and a current transformer CTb2, respectively; measuring terminals of the voltage transformer PTb, the current transformer CTb1, and the current transformer CTb2 are connected with an input terminal of the controller CCb; and
the controller CCa and the controller CCb are connected via an optical fiber pair OFL and perform information exchange, wherein the traction network OCS between the traction substation TSa and the traction substation TSb uses two-way feeding power supply; the controller CCa is used for acquiring power information of the substation TSa in real time, and the controller CCb is used for acquiring power information of the substation TSb in real time; on the basis of the result of the information exchange, the controller CCa and the controller CCb control the power conversion device BCSa and the power conversion devices BCSb respectively to use ride-through power, such that ride-through power returned to the power grid from the traction substation TSa or from the traction substation TSb meets a preset requirement.

In the application scenario of this embodiment, the electrical phase separation between the traction substation TSa and the traction substation TSb is cancelled, that is, the traction network OCS between the traction substation TSa and the traction substation TSb adopts two-way feeding power supply. At the same time, as mentioned in the background technology, it is necessary to connect reactors in series at the secondary side of the traction transformer of the traction substation to reduce the balanced current, or to add a voltage compensation device in the traction substation to realize voltage phase compensation to reduce the output voltage difference of two traction substations with two-way feeding power supply. These two measures are not mandatory in this example. That is, the example may adopt or not adopt the two measures. The core of the example lies in utilizing the ride-through power or the power returned to the traction substation where the ride-through power exists, focusing on addressing the outcome of the ride-through power rather than suppressing its generation. This is the key distinction between the example and the prior art. In addition, on the basis of the technical conception of utilizing the ride-through power, in the present example, since the regenerative power generated during train braking and the original ride-through power are returned to the traction substation together in actual working conditions, the utilization of the ride-through power in the present example may also refer to the utilization of the power that is returned to the traction substation including the ride-through power. By utilizing the ride-through power, the ride-through power returned from the traction substation TSa to the power grid or the ride-through power returned from the traction substation TSb to the power grid meets the preset requirement, thereby eliminating the negative influence of the ride-through power on the power grid and users, and giving full play to the advantages of two-way feeding power supply.

Preferably, the traction substation TSa uses in-phase power supply, the traction bus TSBa of the traction substation TSa supplies power to the traction network OCS via a traction feeder Fal and to a traction network OCSa of a left adjacent power section via a traction feeder Fa2, and the traction network OCS is connected with the traction network OCSa of the left adjacent power section via a sectionalizer.

Here, after the in-phase power supply technology is adopted in the traction substation TSa, the power supply arm is extended, allowing the traction train in the same train to absorb the regenerative power of the braking train with a greater probability. This improves the direct utilization rate of regenerative braking energy, thus significantly reducing the regenerative power finally returned to the power grid, which is even down to 0. For ease of maintenance, the example can set the electric segment at the traction network of the traction substation TSa, specifically between the traction network OCS and the traction network OCSa of the left adjacent power supply section. Through setting of the electric segment, on the one hand, the segmentation measurement and control protection technology can be used together, which allows trains to pass without power disruption while facilitating inspection and maintenance.. On the other hand, with the electric segment set at the traction substation TSb, it is also possible to detect and analyze the operating conditions of the traction network OCS (including detecting and analyzing whether the traction network OCS is in the no-load condition, the power returned to the substation in the no-load condition being the ride-through power. For specific analysis, please refer to Example 2).

Preferably, the traction substation TSb uses in-phase power supply, the traction bus TSBb of the traction substation TSb supplies power to the traction network OCS via a traction feeder Fb1 and to a traction network OCSb of a right adjacent power section via a traction feeder Fb2, and the traction network OCS is connected with the traction network OCSb of the right adjacent power section via a sectionalizer.

Here, after the in-phase power supply technology is adopted in the traction substation TSb, the power supply arm is extended, and the traction train in the same train can absorb the regenerative power of the braking train with greater probability, which improves the direct utilization rate of regenerative braking energy, and greatly reduces the regenerative power finally returned to the power grid, which is even to 0. In order to maintain conveniently, the example can set the electric segment at the traction network of the traction substation TSb, that is, set the electric segment between the traction network OCS and the traction network OCSb of the right adjacent power supply section. Through setting of the electric segment, on the one hand, the segmentation measurement and control protection technology can be used together, which makes the train pass with electricity and gives convenience for maintenance, and on the other hand, with the electric segment set at the traction substation TSa, it is also possible to detect and analyze the operating conditions of the traction network OCS (including detecting and analyzing whether the traction network OCS is in the no-load condition, the power returned to the substation in the no-load condition being the ride-through power. For specific analysis, please refer to Example 2).

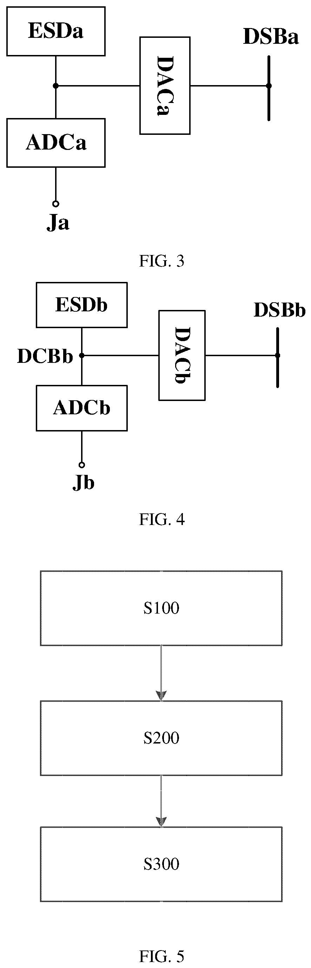

Preferably, as shown in FIG. 3, the power conversion device BCSa includes a rectifier device ADCa and an inverter device DACa, a DC side of the rectifier device ADCa is connected with DC sides of an energy storage device ESDa and the inverter device DACa via a common DC bus DCBa, a three-phase AC side of the inverter device DACa is connected with a power distribution system bus DSBa of the traction substation TSa, and an output terminal of the controller CCa is connected with a control terminal of the power conversion device BCSa.

Here, when the ride-through power or the returned power including the ride-through power flows to the traction substation TSa, the controller CCa may control the energy storage device ESDa to store the ride-through power or the returned power including the ride-through power flowing to the traction substation TSa, and may also control the ride-through power or the returned power including the ride-through power flowing to the traction substation TSa to flow to the bus DSBa of the power distribution system so as to be utilized by the power distribution system related electrical equipment, such that the ride-through power returned to the power grid from the substation TSa meets a preset requirement.

Preferably, as shown in FIG. 4, the power conversion device BCSb includes a rectifier device ADCb and an inverter device DACb, a DC side of the rectifier device ADCb is connected with DC sides of an energy storage device ESDb and the inverter device DACb via a common DC bus DCBb, a three-phase AC side of the inverter device DACb is connected with a power distribution system bus DSBb of the traction substation TSb, and an output terminal of the controller CCb is connected with a control terminal of the power conversion device BCSb.

Here, when the ride-through power or the returned power including the ride-through power flows to the traction substation TSb, the controller CCb may control the energy storage device ESDb to store the ride-through power or the returned power including the ride-through power flowing to the traction substation TSb, and may also control the ride-through power or the returned power including the ride-through power flowing to the traction substation TSb to flow to the bus DSBb of the power distribution system so as to be utilized by the power distribution system related electrical equipment, such that the ride-through power returned to the power grid from the substation TSb meets a preset requirement.

To sum up, the traction network two-way feeding power supply ride-through power utilization system of the example of the invention has at least the following advantages:
First, without changing the power supply structure of the power grid to the railway, the invention enables the utilization of the ride-through power of the traction network, eliminates the negative impact of the ride-through power on the power grid and users, and fully leverages the advantages of two-way feeding power supply.

Second, implementing two-way feeding power supply on the basis of in-phase power supply is more conducive to the utilization of regenerative energy of the power supply arm, improving the direct utilization rate of regenerative braking energy. Under normal circumstances, the regenerative power and electric energy returned to the power grid can meet the preset requirement or is even reduced to 0.

Third, the power conversion device can be connected with the energy storage device of the traction substation and the power distribution system for power supply. Besides using the ride-through power, it can also use the remaining regenerative braking electric energy.

Four, the technology is advanced, reliable, and easy to implement.

### Example 2

As shown in FIG. 5, this example provides a control method of the traction network two-way feeding power supply ride-through power utilization system provided in Example 1, including:
Step S100: the controllers CCa and CCb acquire real-time power information of traction substations TSa and TSb, respectively;
Step S200: the controller CCa and CCb perform information exchange according to the respective acquired real-time power information;
Step S300: the controller CCa controls a power conversion device BCSa to use ride-through power according to the result of the information exchange, and the controller CCb controls a power conversion device BCSb to use ride-through power according to the result of the information exchange, so that the ride-through power returned to the power grid from the traction substation TSa or the ride-through power returned to the power grid from the traction substation TSb meets a preset requirement.

Preferably, the traction substation TSa and the traction substation TSb are supplied with in-phase power, and in the method:
the controller CCa and the controller CCb acquire the real-time power information of the traction substations TSa and TSb, respectively, i.e. the step S100 includes: the controller CCa detects in real time the voltage Ua of the traction bus TSBa, the current Ia1 of the traction feeder Fa1, and the current Ia2 of the traction feeder Fa2; the controller CCa calculates, according to the voltage Ua of the traction bus TSBa and the current Ia1 of the traction feeder Fa1, the active power Pca provided by the traction substation TSa to the traction network OCS; the controller CCa calculates, according to the voltage Ua of the traction bus TSBa and the current Ia2 of the traction feeder Fa2, the active power Pcaa provided by the traction substation TSa to the traction network OCSa of the left adjacent supply section;
the controller CCb detects in real time the voltage Ub of the traction bus TSBb, the current Ib1 of the traction feeder Fb1, and the current Ib2 of the traction feeder Fb2; the controller CCb calculates, according to the voltage Ub of the traction bus TSBb and the current Ib1 of the traction feeder Fb1, the active power Pcb provided by the traction substation TSb to the traction network OCS; the controller CCb calculates, according to the voltage Ub of the traction bus TSBb and the current Ib2 of the traction feeder Fb2, the active power Pcbb provided by the traction substation TSb to the traction network OCSb of the right adjacent supply section;
wherein, the power flowing from the traction substation to the traction network is positive and the power flowing from the traction network to the traction substation is negative.

Here, the power flowing from the traction substation to the traction network is positive, which means that only the power flowing from the traction substation TSa to the traction network OCS or the traction network OCSa of a left adjacent power supply section is positive, and also means that the power flowing from the traction substation TSb to the traction network OCS or the traction network OCSb of a right adjacent power supply section is positive. The power flowing from the traction network to the traction substation is negative, which means that the power flowing from the traction network OCS or the traction network OCSa of a left adjacent power supply section to the traction substation TSa is negative, and also means that the power flowing from the traction network OCS or the traction network OCSb of a right adjacent power supply section to the traction substation TSb is negative.

Preferably, the controllers CCa and CCb perform information exchange according to the respective acquired real-time power information, i.e. the step S200 includes: the controller CCa sends active power Pca and active power Pcaa data to the controller CCb via the optical fiber pair OFL, and the controller CCb sends active power Pcb and active power Pcbb data to the controller CCa via the fiber pair OFL.

Preferably, the controller CCa controls the power conversion device BCSa to use the ride-through power according to the result of the information exchange, and the controller CCb controls the power conversion device BCSb to use the ride-through power according to the result of the information exchange, so that the ride-through power returned to the power grid from the traction substation TSa or the ride-through power returned to the power grid from the traction substation TSb meets a preset requirement includes, i.e., the step S300 includes:
Step S301: if Pca > 0 and Pcb < 0 and, Pca + Pcb = 0, the controllers CCa and CCb determine that the traction network OCS is in a no-load condition, the active power Pca and the active power Pcb being ride-through power and flowing from the traction feeder Fal to the traction feeder Fb1, at this time: if the active power Pca ≥ Pcbb ≥ 0, the controller CCb controls the power conversion device BCSb to supply power to the power distribution system bus DSBb or to operate the energy storage device ESDb in an energy storage state, when the power sum of both is equal to Pca-Pcbb, the controller CCa controls the power conversion device BCSa to standby; if the active power Pcbb ≥ Pca, the controller CCb controls the power conversion device BCSb to standby, while the controller CCa controls the power conversion device BCSa to standby;
Step S302: if Pcb > 0 and Pca < 0 and, Pca + Pcb = 0, the controllers CCa and CCb determine that the traction network OCS is in a no-load condition, the active power Pca and the active power Pcb being ride-through power and flowing from the traction feeder Fb1 to the traction feeder Fa1, at this time: if the active power Pcb ≥ Pcaa ≥ 0, the controller CCa controls the power conversion device BCSa to supply power to the power distribution system bus DSBa or to operate the energy storage device ESDa in an energy storage state, the power sum of both being equal to Pcb-Pcaa, while the controller CCb contols the power conversion device BCSb to standby; if the active power Pcaa ≥ Pcb, the controller CCa controls the power conversion device BCSa to standby, while the controller CCb controls the power conversion device BCSb to standby; and
Step S303: if |Pca + Pcb| > 0, and Pca > 0 and Pcb > 0, the controllers CCa and CCb determine that the traction network OCS is in a traction condition, the controller CCa controls the power conversion device BCSa to operate the energy storage device ESDa in a discharged state with a discharge power of the energy storage device ESDa being less or equal to Pca, while the controller CCb controls the power conversion device BCSb to operate the energy storage device ESDb in a discharged state with a discharge power of the energy storage device ESDb being less or equal to Pcb.

Preferable, the controller CCa controls the power conversion device BCSa to use the ride-through power according to the result of the information exchange, and the controller CCb controls the power conversion device BCSb to use the ride-through power according to the result of the information exchange, so that the ride-through power returned to the power grid from the traction substation TSa or the ride-through power returned to the power grid from the traction substation TSb meets a preset requirement, i.e. the step 300 further includes:
Step S304: if Pca < 0 and Pcb < 0, the controllers CCa and CCb determine that the traction network OCS is in a braking condition, at this time:
Step S304-1: if Pcaa < 0, the controller CCa controls the power conversion device BCSa to supply power to the power distribution system bus DSBa or to operate the energy storage device ESDa in an energy storage state, the power sum of both being equal to |Pca| + |Pcaa|; if Pcaa > 0 and Pcaa < |Pca|, the controller CCa controls the power conversion device BCSa to supply power to the power distribution system bus DSBa or to operate the energy storage device ESDa in an energy storage state, the power sum of both being equal to |Pca|-|Pcaa|; if Pcaa > 0 and Pcaa ≥ |Pca|, the controller CCa controls the power conversion device BCSa to standby; and
Step S304-2: if Pcbb < 0, the controller CCb controls the power conversion device BCSb to supply power to the power distribution system bus DSBb or to operate the energy storage device ESDb in an energy storage state, the power sum of both being equal to |Pcb| + |Pcbb|; if Pcbb > 0 and Pcbb < |Pcb|, the controller CCb controls the power conversion device BCSb to supply power to the power distribution system bus DSBb or to operate the energy storage device ESDb in an energy storage state, the power sum of both being equal to |Pcb|-|Pcbb|; if Pcbb > 0 and Pcbb ≥ |Pcb|, the controller CCb controls the power conversion device BCSb to standby.

The above are only preferred embodiments of the present invention, and it should be noted that the above preferred embodiments should not be regarded as limiting the present invention, and the scope of protection of the present invention should be subject to the scope defined by the claims. For those skilled in the art, several improvements and modifications can be made without departing from the spirit and scope of the present invention, which should also be regarded as the scope of protection of the present invention.

## Claims

1. A traction network two-way feeding power supply ride-through power utilization system, wherein the system comprises:
a power conversion device BCSa and a controller CCa that are arrangeable at a traction substation TSa, wherein the power conversion device BCSa is connectable with a traction bus TSBa via an AC port Ja; the traction bus TSBa is provided with a voltage transformer PTa, a traction feeder Fa1 and a traction feeder Fa2 are provided with a current transformer CTa1 and a current transformer CTa2, respectively; an input terminal of the controller CCa is connectable to measuring terminals of the voltage transformer PTa, the current transformer CTa1, and the current transformer CTa2;
a power conversion device BCSb and a controller CCb that are arrangeable at a traction substation TSb, wherein the power conversion device BCSb is connectable with a traction bus TSBb via an AC port Jb; the traction bus TSBb is provided with a voltage transformer PTb, a traction feeder Fb1 and a traction feeder Fb2 are provided with a current transformer CTb1 and a current transformer CTb2, respectively; an input terminal of the controller CCb is connectable to measuring terminals of the voltage transformer PTb, the current transformer CTb1, and the current transformer CTb2; and
the controller CCa and the controller CCb are connected via an optical fiber pair OFL and perform information exchange, wherein the traction network OCS between the traction substation TSa and the traction substation TSb uses two-way feeding power supply; the controller CCa is configured to acquire power information of the substation TSa in real time, and the controller CCb is configured to acquire power information of the substation TSb in real time; on the basis of the result of the information exchange, the controller CCa and the controller CCb control the power conversion device BCSa and the power conversion devices BCSb respectively to use ride-through power, such that ride-through power returned to the power grid from the traction substation TSa or from the traction substation TSb meets a preset requirement.

2. The traction network two-way feeding power supply ride-through power utilization system according to claim 1, configured for operation with the traction substation TSa using in-phase power supply, the traction bus TSBa of the traction substation TSa supplies power to the traction network OCS via a traction feeder Fa1 and to a traction network OCSa of a left adjacent power section via a traction feeder Fa2, and the traction network OCS is connected with the traction network OCSa of the left adjacent power section via a sectionalizer.

3. The traction network two-way feeding power supply ride-through power utilization system according to claim 1, configured for operation with the traction substation TSb using in-phase power supply, the traction bus TSBb of the traction substation TSb supplies power to the traction network OCS via a traction feeder Fb1 and to a traction network OCSb of a right adjacent power section via a traction feeder Fb2, and the traction network OCS is connected with the traction network OCSb of the right adjacent power section via a sectionalizer.

4. The traction network two-way feeding power supply ride-through power utilization system according to claim 1, wherein the power conversion device BCSa comprises a rectifier device ADCa and an inverter device DACa, a DC side of the rectifier device ADCa is connected with DC sides of an energy storage device ESDa and the inverter device DACa via a common DC bus DCBa, a three-phase AC side of the inverter device DACa is connectable with a power distribution system bus DSBa of the traction substation TSa, and an output terminal of the controller CCa is connected with a control terminal of the power conversion device BCSa.

5. The traction network two-way feeding power supply ride-through power utilization system according to claim 1, **characterized in that** the power conversion device BCSb comprises a rectifier device ADCb and an inverter device DACb, a DC side of the rectifier device ADCb is connected with DC sides of an energy storage device ESDb and the inverter device DACb via a common DC bus DCBb, a three-phase AC side of the inverter device DACb is connectable with a power distribution system bus DSBb of the traction substation TSb, and an output terminal of the controller CCb is connected with a control terminal of the power conversion device BCSb.

6. A control method of the traction network two-way feeding power supply ride-through power utilization system according to any one of claims 1-5, wherein the method comprises:
acquiring real-time power information of traction substations TSa and TSb, respectively by controllers CCa and CCb;
performing information exchange according to the respective acquired real-time power information by the controllers CCa and CCb; and
controlling a power conversion device BCSa to use ride-through power according to the result of the information exchange by the controller CCa, and controlling a power conversion device BCSb to use ride-through power according to the result of the information exchange by the controller CCb, so that the ride-through power returned to the power grid from the traction substation TSa or the ride-through power returned to the power grid from the traction substation TSb meets a preset requirement.

7. The control method according to claim 6, **characterized in that** the traction substations TSa and TSb are supplied with in-phase power, and in the method:
acquiring the real-time power information of the traction substation TSa by the controller CCa comprises: detecting in real time the voltage Ua of the traction bus TSBa, the current Ia1 of the traction feeder Fa1, and the current Ia2 of the traction feeder Fa2 by the controller CCa; calculating, according to the voltage Ua of the traction bus TSBa and the current Ia1 of the traction feeder Fa1, the active power Pca provided by the traction substation TSa to the traction network OCS by the controller CCa; calculating, according to the voltage Ua of the traction bus TSBa and the current Ia2 of the traction feeder Fa2, the active power Pcaa provided by the traction substation TSa to the traction network OCSa of the left adjacent supply section by the controller CCa;
acquiring the real-time power information of the traction substation TSb by the controller CCb comprises: detecting in real time the voltage Ub of the traction bus TSBb, the current Ib1 of the traction feeder Fb1, and the current Ib2 of the traction feeder Fb2 by the controller CCb; calculating, according to the voltage Ub of the traction bus TSBb and the current Ib1 of the traction feeder Fb1, the active power Pcb provided by the traction substation TSb to the traction network OCS by the controller CCb; calculating, according to the voltage Ub of the traction bus TSBb and the current Ib2 of the traction feeder Fb2, the active power Pcbb provided by the traction substation TSb to the traction network OCSb of the right adjacent supply section by the controller CCb;
wherein, the power flowing from the traction substation to the traction network is positive and the power flowing from the traction network to the traction substation is negative.

8. The control method according to claim 7, wherein performing information exchange according to the respective acquired real-time power information by the controllers CCa and CCb comprises: sending active power Pca and active power Pcaa data to the controller CCb via the optical fiber pair OFL by the controller CCa, and sending active power Pcb and active power Pcbb data to the controller CCa via the fiber pair OFL by the controller CCb.

9. The control method according to claim 6, wherein controlling the power conversion device BCSa to use the ride-through power according to the result of the information exchange by the controller CCa, and controlling the power conversion device BCSb to use the ride-through power according to the result of the information exchange by the controller CCb, so that the ride-through power returned to the power grid from the traction substation TSa or the ride-through power returned to the power grid from the traction substation TSb meets a preset requirement comprises:
if Pca > 0 and Pcb < 0 and, Pca + Pcb = 0, determining, by the controllers CCa and CCb, that the traction network OCS is in a no-load condition, the active power Pca and the active power Pcb being ride-through power and flowing from the traction feeder Fal to the traction feeder Fb1, at this time: if the active power Pca ≥ Pcbb ≥ 0, controlling, by the controller CCb, the power conversion device BCSb to supply power to the power distribution system bus DSBb or to operate the energy storage device ESDb in an energy storage state, the power sum of both being equal to Pca-Pcbb, while controlling, by the controller CCa, the power conversion device BCSa to standby; if the active power Pcbb ≥ Pca, controlling, by the controller CCb, the power conversion device BCSb to standby, while controlling, by the controller CCa, the power conversion device BCSa to standby;
if Pcb > 0 and Pca < 0 and, Pca + Pcb = 0, determining, by the controllers CCa and CCb, that the traction network OCS is in a no-load condition, the active power Pca and the active power Pcb being ride-through power and flowing from the traction feeder Fb1 to the traction feeder Fa1, at this time: if the active power Pcb ≥ Pcaa ≥ 0, controlling, by the controller CCa, the power conversion device BCSa to supply power to the power distribution system bus DSBa or to operate the energy storage device ESDa in an energy storage state, the power sum of both being equal to Pcb-Pcaa, while controlling, by the controller CCb, the power conversion device BCSb to standby; if the active power Pcaa ≥ Pcb, controlling, by the controller CCa, the power conversion device BCSa to standby, while controlling, by the controller CCb, the power conversion device BCSb to standby; and
if |Pca + Pcb| > 0, and Pca > 0 and Pcb > 0, determining, by the controllers CCa and CCb, that the traction network OCS is in a traction condition, controlling, by the controller CCa, the power conversion device BCSa to operate the energy storage device ESDa in a discharged state with a discharge power of the energy storage device ESDa being less or equal to Pca, while controlling, by the controller CCb, the power conversion device BCSb to operate the energy storage device ESDb in a discharged state with a discharge power of the energy storage device ESDb being less or equal to Pcb.

10. The control method according to claim 9, wherein controlling the power conversion device BCSa to use the ride-through power according to the result of the information exchange by the controller CCa, and controlling the power conversion device BCSb to use the ride-through power according to the result of the information exchange by the controller CCb, so that the ride-through power returned to the power grid from the traction substation TSa or the ride-through power returned to the power grid from the traction substation TSb meets a preset requirement comprises:
if Pca < 0 and Pcb < 0, determining, by the controllers CCa and CCb, that the traction network OCS is in a braking condition, at this time:
if Pcaa < 0, controlling, by the controller CCa, the power conversion device BCSa to supply power to the power distribution system bus DSBa or to operate the energy storage device ESDa in an energy storage state, the power sum of both being equal to |Pca| + |Pcaa|; if Pcaa > 0 and Pcaa < |Pca|, controlling, by the controller CCa, the power conversion device BCSa to supply power to the power distribution system bus DSBa or to operate the energy storage device ESDa in an energy storage state, the power sum of both being equal to |Pca|-|Pcaa|; if Pcaa > 0 and Pcaa ≥ |Pca|, controlling, by the controller CCa, the power conversion device BCSa to standby; and
if Pcbb < 0, controlling, by the controller CCb, the power conversion device BCSb to supply power to the power distribution system bus DSBb or to operate the energy storage device ESDb in an energy storage state, the power sum of both being equal to |Pcb| + |Pcbb|; if Pcbb > 0 and Pcbb < |Pcb|, controlling, by the controller CCb, the power conversion device BCSb to supply power to the power distribution system bus DSBb or to operate the energy storage device ESDb in an energy storage state, the power sum of both being equal to |Pcb|-|Pcbb|; if Pcbb > 0 and Pcbb ≥ |Pcb|, controlling, by the controller CCb, the power conversion device BCSb to standby.

## Patentansprüche

1. Bahnstromnetz-Überbrückungsstromnutzungssystem mit bidirektionaler Stromversorgung, wobei das System Folgendes umfasst:
einen Stromrichter BCSa und einen Regler CCa, die an einem Bahnstromunterwerk TSa angeordnet werden können, wobei der Stromrichter BCSa über einen Wechselstromanschluss Ja mit einem Bahnstrombus TSBa verbunden werden kann, wobei der Bahnstrombus TSBa mit einem Spannungswandler PTa versehen ist, wobei eine Bahnstromzuführung Fal mit einem Stromwandler CTa1 bzw. eine Bahnstromzuführung Fa2 mit einem Stromwandler CTa2 versehen ist,
einen Eingangsanschluss des Reglers CCa, der mit Messanschlüssen des Spannungswandlers PTa, des Stromwandlers CTa1 und des Stromwandlers CTa2 verbunden werden kann,
einen Stromrichter BCSb und einen Regler CCb, die an einem Bahnstromunterwerk TSb angeordnet werden können, wobei der Stromrichter BCSb über einen Wechselstromanschluss Jb mit einem Bahnstrombus TSBb verbunden werden kann, wobei der Bahnstrombus TSBb mit einem Spannungswandler PTb versehen ist, wobei eine Bahnstromzuführung Fb1 mit einem Stromwandler CTb1 bzw. eine Bahnstromzuführung Fb2 mit einem Stromwandler CTb2 versehen ist, und
einen Eingangsanschluss des Reglers CCb, der mit Messanschlüssen des Spannungswandlers PTb, des Stromwandlers CTb1 und des Stromwandlers CTb2 verbunden werden kann,
wobei der Regler CCa und der Regler CCb über ein Glasfaserpaar OFL verbunden sind und einen Datenaustausch durchführen, wobei das Bahnstromnetz OCS zwischen dem Bahnstromunterwerk TSa und dem Bahnstromunterwerk TSb eine bidirektionale Stromversorgung verwendet, wobei der Regler CCa dazu eingerichtet ist, in Echtzeit Stromdaten des Unterwerks TSa zu erfassen, wobei der Regler CCb dazu eingerichtet ist, in Echtzeit Stromdaten des Unterwerks TSb zu erfassen, wobei anhand des Ergebnisses des Datenaustauschs der Regler CCa bzw. der Regler CCb bewirkt, dass der Stromrichter BCSa bzw. der Stromrichter BCSb Überbrückungsstrom so nutzt, dass von dem Bahnstromunterwerk TSa bzw. von dem Bahnstromunterwerk TSb in das Stromnetz zurückgeführter Überbrückungsstrom gewissen Vorgaben entspricht.

2. Bahnstromnetz-Überbrückungsstromnutzungssystem mit bidirektionaler Stromversorgung nach Anspruch 1, das für den Betrieb mit dem Bahnstromunterwerk TSa unter Verwendung einer phasengleichen Stromversorgung eingerichtet ist, wobei der Bahnstrombus TSBa des Bahnstromunterwerks TSa das Bahnstromnetz OCS über eine Bahnstromzuführung Fal und das Bahnstromnetz OCSa eines links angrenzenden Stromversorgungsabschnitts über eine Bahnstromzuführung Fa2 mit Strom versorgt, wobei das Bahnstromnetz OCS über einen Trennschalter mit dem Bahnstromnetz OCSa des links angrenzenden Stromversorgungsabschnitts verbunden ist.

3. Bahnstromnetz-Überbrückungsstromnutzungssystem mit bidirektionaler Stromversorgung nach Anspruch 1, das für den Betrieb mit dem Bahnstromunterwerk TSb unter Verwendung einer phasengleichen Stromversorgung eingerichtet ist, wobei der Bahnstrombus TSBb des Bahnstromunterwerks TSb das Bahnstromnetz OCS über eine Bahnstromzuführung Fb1 und das Bahnstromnetz OCSb eines rechts angrenzenden Stromversorgungsabschnitts über eine Bahnstromzuführung Fb2 mit Strom versorgt, wobei das Bahnstromnetz OCS über einen Trennschalter mit dem Bahnstromnetz OCSb des rechts angrenzenden Stromversorgungsabschnitts verbunden ist.

4. Bahnstromnetz-Überbrückungsstromnutzungssystem mit bidirektionaler Stromversorgung nach Anspruch 1, wobei der Stromrichter BCSa einen Gleichrichter ADCa und einen Wechselrichter DACa umfasst, wobei eine Gleichstromseite des Gleichrichters ADCa über einen gemeinsamen Gleichstrombus DCBa mit Gleichstromseiten eines Energiespeichers ESDa und des Wechselrichters DACa verbunden ist, wobei eine dreiphasige Wechselstromseite des Wechselrichters DACa mit einem Stromverteilungssystembus DSBa des Bahnstromunterwerks TSa verbunden werden kann, wobei ein Ausgangsanschluss des Reglers CCa mit einem Regelanschluss des Stromrichters BCSa verbunden ist.

5. Bahnstromnetz-Überbrückungsstromnutzungssystem mit bidirektionaler Stromversorgung nach Anspruch 1, **dadurch gekennzeichnet, dass** der Stromrichter BCSb einen Gleichrichter ADCb und einen Wechselrichter DACb umfasst, wobei eine Gleichstromseite des Gleichrichters ADCb über einen gemeinsamen Gleichstrombus DCBb mit Gleichstromseiten eines Energiespeichers ESDb und des Wechselrichters DACb verbunden ist, wobei eine dreiphasige Wechselstromseite des Wechselrichters DACb mit einem Stromverteilungssystembus DSBb des Bahnstromunterwerks TSb verbunden werden kann, wobei ein Ausgangsanschluss des Reglers CCb mit einem Regelanschluss des Stromrichters BCSb verbunden ist.

6. Verfahren zur Regelung des Bahnstromnetz-Überbrückungsstromnutzungssystems mit bidirektionaler Stromversorgung nach einem der Ansprüche 1 bis 5, wobei das Verfahren folgende Schritte umfasst:
der Regler CCa erfasst Echtzeit-Stromdaten des Bahnstromunterwerks TSa bzw. der Regler CCb erfasst Echtzeit-Stromdaten des Bahnstromunterwerks TSb,
die Regler CCa und CCb führen einen Datenaustausch anhand der jeweiligen erfassten Echtzeit-Stromdaten durch, und
anhand des Ergebnisses des Datenaustauschs der Regler CCa bzw. der Regler CCb bewirkt, dass ein Stromrichter BCSa bzw. ein Stromrichter BCSb Überbrückungsstrom so nutzt, dass von dem Bahnstromunterwerk TSa bzw. von dem Bahnstromunterwerk TSb in das Stromnetz zurückgeführter Überbrückungsstrom gewissen Vorgaben entspricht.

7. Verfahren nach Anspruch 6, **dadurch gekennzeichnet, dass** die Bahnstromunterwerke TSa und TSb mit phasengleichem Strom versorgt werden, wobei
im Verfahrensschritt, bei dem der Regler CCa die Echtzeit-Stromdaten des Bahnstromunterwerks TSa erfasst, der Regler CCa in Echtzeit die Spannung Ua des Bahnstrombusses TSBa, den Strom Ia1 der Bahnstromzuführung Fal und den Strom Ia2 der Bahnstromzuführung Fa2 ermittelt, wobei der Regler CCa anhand der Spannung Ua des Bahnstrombusses TSBa und des Stroms Ia1 der Bahnstromzuführung Fal den von dem Bahnstromunterwerk TSa in das Bahnstromnetz OCS gelieferten Wirkstrom Pca berechnet, wobei der Regler CCa anhand der Spannung Ua des Bahnstrombusses TSBa und des Stroms Ia2 der Bahnstromzuführung Fa2 den von dem Bahnstromunterwerk TSa in das Bahnstromnetz OCSa des links angrenzenden Stromversorgungsabschnitts gelieferten Wirkstrom Pcaa berechnet,
im Verfahrensschritt, bei dem der Regler CCb die Echtzeit-Stromdaten des Bahnstromunterwerks TSb erfasst, der Regler CCb in Echtzeit die Spannung Ub des Bahnstrombusses TSBb, den Strom Ib1 der Bahnstromzuführung Fb1 und den Strom Ib2 der Bahnstromzuführung Fb2 ermittelt, wobei der Regler CCb anhand der Spannung Ub des Bahnstrombusses TSBb und des Stroms Ib1 der Bahnstromzuführung Fb1 den von dem Bahnstromunterwerk TSb in das Bahnstromnetz OCS gelieferten Wirkstrom Pcb berechnet, wobei der Regler CCb anhand der Spannung Ub des Bahnstrombusses TSBb und des Stroms Ib2 der Bahnstromzuführung Fb2 den von dem Bahnstromunterwerk TSb in das Bahnstromnetz OCSb des rechts angrenzenden Stromversorgungsabschnitts gelieferten Wirkstrom Pcbb berechnet,
wobei der von dem Bahnstromunterwerk in das Bahnstromnetz fließende Strom positiv bzw. der von dem Bahnstromnetz in das Bahnstromunterwerk fließende Strom negativ ist.

8. Verfahren nach Anspruch 7, wobei im Verfahrensschritt, bei dem die Regler CCa und CCb einen Datenaustausch anhand der jeweiligen erfassten Echtzeit-Stromdaten durchführen, der Regler CCa Daten über den Wirkstrom Pca und den Wirkstrom Pcaa an den Regler CCb über das Glasfaserpaar OFL sendet und der Regler CCb Daten über den Wirkstrom Pcb und den Wirkstrom Pcbb an den Regler CCa über das Glasfaserpaar OFL sendet.

9. Verfahren nach Anspruch 6, wobei im Verfahrensschritt, bei dem anhand des Ergebnisses des Datenaustauschs der Regler CCa bzw. der Regler CCb bewirkt, dass der Stromrichter BCSa bzw. der Stromrichter BCSb Überbrückungsstrom so nutzt, dass von dem Bahnstromunterwerk TSa bzw. von dem Bahnstromunterwerk TSb in das Stromnetz zurückgeführter Überbrückungsstrom gewissen Vorgaben entspricht,
bei Pca > 0 und Pcb < 0 und Pca + Pcb = 0 die Regler CCa und CCb bestimmen, dass sich das Bahnstromnetz OCS im Leerlaufzustand befindet, wobei der Wirkstrom Pca bzw. der Wirkstrom Pcb Überbrückungsstrom ist und gerade von der Bahnstromzuführung Fal in die Bahnstromzuführung Fb1 fließt,
bei einem Wirkstrom Pca ≥ Pcbb ≥ 0 der Regler CCb bewirkt, dass der Stromrichter BCSb den Stromverteilungssystembus DSBb mit Strom versorgt oder den Energiespeicher ESDb im Energiespeicherzustand betreibt, wobei die Stromsumme der beiden gleich Pca - Pcbb ist, während der Regler CCa bewirkt, dass sich der Stromrichter BCSa im Bereitschaftsmodus befindet, und bei einem Wirkstrom Pcbb ≥ Pca der Regler CCb bewirkt, dass sich der Stromrichter BCSb im Bereitschaftsmodus befindet, während der Regler CCa bewirkt, dass sich der Stromrichter BCSa im Bereitschaftsmodus befindet,
bei Pcb > 0 und Pca < 0 und Pca + Pcb = 0 die Regler CCa und CCb bestimmen, dass sich das Bahnstromnetz OCS im Leerlaufzustand befindet, wobei der Wirkstrom Pca bzw. der Wirkstrom Pcb Überbrückungsstrom ist und gerade von der Bahnstromzuführung Fb1 in die Bahnstromzuführung Fal fließt,
bei einem Wirkstrom Pcb ≥ Pcaa ≥ 0 der Regler CCa bewirkt, dass der Stromrichter BCSa den Stromverteilungssystembus DSBa mit Strom versorgt oder den Energiespeicher ESDa im Energiespeicherzustand betreibt, wobei die Stromsumme der beiden gleich Pcb - Pcaa ist, während der Regler CCb bewirkt, dass sich der Stromrichter BCSb im Bereitschaftsmodus befindet, und bei einem Wirkstrom Pcaa ≥ Pcb der Regler CCa bewirkt, dass sich der Stromrichter BCSa im Bereitschaftsmodus befindet, während der Regler CCb bewirkt, dass sich der Stromrichter BCSb im Bereitschaftsmodus befindet, und
bei |Pca + Pcb| > 0 und Pca > 0 und Pcb > 0 die Regler CCa und CCb bestimmen, dass sich das Bahnstromnetz OCS im Bahnstromzustand befindet, wobei der Regler CCa bewirkt, dass der Stromrichter BCSa den Energiespeicher ESDa im Entladezustand betreibt, wobei ein Entladestrom des Energiespeichers ESDa kleiner als oder gleich Pca ist, während der Regler CCb bewirkt, dass der Stromrichter BCSb den Energiespeicher ESDb im Entladezustand betreibt, wobei ein Entladestrom des Energiespeichers ESDb kleiner als oder gleich Pcb ist.

10. Verfahren nach Anspruch 9, wobei im Verfahrensschritt, bei dem anhand des Ergebnisses des Datenaustauschs der Regler CCa bzw. der Regler CCb bewirkt, dass der Stromrichter BCSa bzw. der Stromrichter BCSb Überbrückungsstrom so nutzt, dass von dem Bahnstromunterwerk TSa bzw. von dem Bahnstromunterwerk TSb in das Stromnetz zurückgeführter Überbrückungsstrom gewissen Vorgaben entspricht,
bei Pca < 0 und Pcb < 0 die Regler CCa und CCb bestimmen, dass sich das Bahnstromnetz OCS gerade im Bremszustand befindet,
bei Pcaa < 0 der Regler CCa bewirkt, dass der Stromrichter BCSa den Stromverteilungssystembus DSBa mit Strom versorgt oder den Energiespeicher ESDa im Energiespeicherzustand betreibt, wobei die Stromsumme der beiden gleich |Pca| + |Pcaa| ist, und bei Pcaa > 0 und Pcaa < |Pca| der Regler CCa bewirkt, dass der Stromrichter BCSa den Stromverteilungssystembus DSBa mit Strom versorgt oder den Energiespeicher ESDa im Energiespeicherzustand betreibt, wobei die Stromsumme der beiden gleich |Pca| - |Pcaa| ist, und bei Pcaa > 0 und Pcaa ≥ |Pca| der Regler CCa bewirkt, dass sich der Stromrichter BCSa im Bereitschaftsmodus befindet, und
bei Pcbb < 0 der Regler CCb bewirkt, dass der Stromrichter BCSb den Stromverteilungssystembus DSBb mit Strom versorgt oder den Energiespeicher ESDb im Energiespeicherzustand betreibt, wobei die Stromsumme der beiden gleich |Pcb| + |Pcbb| ist, und bei Pcbb > 0 und Pcbb < |Pcb| der Regler CCb bewirkt, dass der Stromrichter BCSb den Stromverteilungssystembus DSBb mit Strom versorgt oder den Energiespeicher ESDb im Energiespeicherzustand betreibt, wobei die Stromsumme der beiden gleich |Pcb| - |Pcbb| ist, und bei Pcbb > 0 und Pcbb ≥ |Pcb| der Regler CCb bewirkt, dass sich der Stromrichter BCSb im Bereitschaftsmodus befindet.

## Revendications

1. Système d'utilisation d'énergie électrique transitoire pour l'alimentation électrique bidirectionnelle dans un réseau de traction, comprenant:
un convertisseur électrique BCSa et un dispositif de commande CCa pouvant être disposés à une sous-station de traction TSa, le convertisseur électrique BCSa pouvant être relié à un bus de traction TSBa via un port à courant alternatif Ja, le bus de traction TSBa étant équipé d'un transformateur de tension PTa, un alimentateur de traction Fal étant équipé d'un transformateur de courant CTa1, et un alimentateur de traction Fa2 étant équipé d'un transformateur de courant CTa2;
une borne d'entrée du dispositif de commande CCa pouvant être reliée à des bornes de mesure du transformateur de tension PTa, du transformateur de courant CTa1 et du transformateur de courant CTa2;
un convertisseur électrique BCSb et un dispositif de commande CCb pouvant être disposés à une sous-station de traction TSb, le convertisseur électrique BCSb pouvant être relié à un bus de traction TSBb via un port à courant alternatif Jb, le bus de traction TSBb étant équipé d'un transformateur de tension PTb, un alimentateur de traction Fb1 étant équipé d'un transformateur de courant CTb1, et un alimentateur de traction Fb2 étant équipé d'un transformateur de courant CTb2; et
une borne d'entrée du dispositif de commande CCb pouvant être reliée à des bornes de mesure du transformateur de tension PTb, du transformateur de courant CTb1 et du transformateur de courant CTb2,
le dispositif de commande CCa et le dispositif de commande CCb étant reliés via une paire de fibres optiques OFL et réalisant un échange d'informations, le réseau de traction OCS entre la sous-station de traction TSa et la sous-station de traction TSb utilisant une alimentation électrique bidirectionnelle, le dispositif de commande CCa étant configuré pour acquérir en temps réel des informations électriques de la sous-station TSa, le dispositif de commande CCb étant configuré pour acquérir en temps réel des informations électriques de la sous-station TSb, et le dispositif de commande CCa commandant le convertisseur électrique BCSa et le dispositif de commande CCb commandant le convertisseur électrique BCSb sur la base du résultat de l'échange d'informations pour utiliser de l'énergie électrique transitoire de sorte que de l'énergie électrique transitoire renvoyée depuis la sous-station de traction TSa ou depuis la sous-station de traction TSb vers le réseau électrique réponde à une exigence prédéfinie.

2. Système d'utilisation d'énergie électrique transitoire pour l'alimentation électrique bidirectionnelle dans un réseau de traction selon la revendication 1, configuré pour fonctionner avec la sous-station de traction TSa en utilisant une alimentation électrique en phase, le bus de traction TSBa de la sous-station de traction TSa alimentant en énergie électrique le réseau de traction OCS via un alimentateur de traction Fal et alimentant en énergie électrique un réseau de traction OCSa d'une section d'alimentation électrique adjacente gauche via un alimentateur de traction Fa2, et le réseau de traction OCS étant relié au réseau de traction OCSa de la section d'alimentation électrique adjacente gauche via un sectionneur.

3. Système d'utilisation d'énergie électrique transitoire pour l'alimentation électrique bidirectionnelle dans un réseau de traction selon la revendication 1, configuré pour fonctionner avec la sous-station de traction TSb en utilisant une alimentation électrique en phase, le bus de traction TSBb de la sous-station de traction TSb alimentant en énergie électrique le réseau de traction OCS via un alimentateur de traction Fb1 et alimentant en énergie électrique un réseau de traction OCSb d'une section d'alimentation électrique adjacente droite via un alimentateur de traction Fb2, et le réseau de traction OCS étant relié au réseau de traction OCSb de la section d'alimentation électrique adjacente droite via un sectionneur.

4. Système d'utilisation d'énergie électrique transitoire pour l'alimentation électrique bidirectionnelle dans un réseau de traction selon la revendication 1, dans lequel le convertisseur électrique BCSa comprend un redresseur ADCa et un onduleur DACa, un côté à courant continu du redresseur ADCa étant relié à des côtés à courant continu d'un dispositif de stockage d'énergie ESDa et de l'onduleur DACa via un bus à courant continu commun DCBa, un côté à courant alternatif triphasé de l'onduleur DACa pouvant être relié à un bus de système de distribution électrique DSBa de la sous-station de traction TSa, et une borne de sortie du dispositif de commande CCa étant reliée à une borne de commande du convertisseur électrique BCSa.

5. Système d'utilisation d'énergie électrique transitoire pour l'alimentation électrique bidirectionnelle dans un réseau de traction selon la revendication 1, dans lequel le convertisseur électrique BCSb comprend un redresseur ADCb et un onduleur DACb, un côté à courant continu du redresseur ADCb étant relié à des côtés à courant continu d'un dispositif de stockage d'énergie ESDb et de l'onduleur DACb via un bus à courant continu commun DCBb, un côté à courant alternatif triphasé de l'onduleur DACb pouvant être relié à un bus de système de distribution électrique DSBb de la sous-station de traction TSb, et une borne de sortie du dispositif de commande CCb étant reliée à une borne de commande du convertisseur électrique BCSb.

6. Procédé de commande du système d'utilisation d'énergie électrique transitoire pour l'alimentation électrique bidirectionnelle dans un réseau de traction selon l'une quelconque des revendications 1 à 5, comprenant :
l'acquisition d'informations électriques temps réel de la sous-station de traction TSa par le dispositif de commande CCa et l'acquisition d'informations électriques temps réel de la sous-station de traction TSb par le dispositif de commande CCb;
la réalisation d'un échange d'informations en fonction des informations électriques temps réel acquises respectives par les dispositifs de commande CCa et CCb; et
la commande d'un convertisseur électrique BCSa pour utiliser de l'énergie électrique transitoire en fonction du résultat de l'échange d'informations par le dispositif de commande CCa et la commande d'un convertisseur électrique BCSb pour utiliser de l'énergie électrique transitoire en fonction du résultat de l'échange d'informations par le dispositif de commande CCb de sorte que de l'énergie électrique transitoire renvoyée depuis la sous-station de traction TSa ou depuis la sous-station de traction TSb vers le réseau électrique réponde à une exigence prédéfinie.

7. Procédé de commande selon la revendication 6, **caractérisé en ce que** les sous-stations de traction TSa et TSb sont alimentées en énergie électrique en phase,
l'acquisition des informations électriques temps réel de la sous-station de traction TSa par le dispositif de commande CCa comprenant : la détection en temps réel de la tension Ua du bus de traction TSBa, du courant Ia1 de l'alimentateur de traction Fal et du courant Ia2 de l'alimentateur de traction Fa2 par le dispositif de commande CCa; le calcul, en fonction de la tension Ua du bus de traction TSBa et du courant Ia1 de l'alimentateur de traction Fa1, de l'énergie électrique active Pca fournie par la sous-station de traction TSa au réseau de traction OCS par le dispositif de commande CCa; et le calcul, en fonction de la tension Ua du bus de traction TSBa et du courant Ia2 de l'alimentateur de traction Fa2, de l'énergie électrique active Pcaa fournie par la sous-station de traction TSa au réseau de traction OCSa de la section d'alimentation électrique adjacente gauche par le dispositif de commande CCa;
l'acquisition des informations électriques temps réel de la sous-station de traction TSb par le dispositif de commande CCb comprenant : la détection en temps réel de la tension Ub du bus de traction TSBb, du courant Ib1 de l'alimentateur de traction Fb1 et du courant Ib2 de l'alimentateur de traction Fb2 par le dispositif de commande CCb; le calcul, en fonction de la tension Ub du bus de traction TSBb et du courant Ib1 de l'alimentateur de traction Fb1, de l'énergie électrique active Pcb fournie par la sous-station de traction TSb au réseau de traction OCS par le dispositif de commande CCb; et le calcul, en fonction de la tension Ub du bus de traction TSBb et du courant Ib2 de l'alimentateur de traction Fb2, de l'énergie électrique active Pcbb fournie par la sous-station de traction TSb au réseau de traction OCSb de la section d'alimentation électrique adjacente droite par le dispositif de commande CCb,
l'énergie électrique circulant de la sous-station de traction vers le réseau de traction étant positive et l'énergie électrique circulant du réseau de traction vers la sous-station de traction étant négative.

8. Procédé de commande selon la revendication 7, dans lequel la réalisation d'un échange d'informations en fonction des informations électriques temps réel acquises respectives par les dispositifs de commande CCa et CCb comprend : la transmission de données sur l'énergie électrique active Pca et de données sur l'énergie électrique active Pcaa au dispositif de commande CCb via la paire de fibres optiques OFL par le dispositif de commande CCa; et la transmission de données sur l'énergie électrique active Pcb et de données sur l'énergie électrique active Pcbb au dispositif de commande CCa via la paire de fibres optiques OFL par le dispositif de commande CCb.

9. Procédé de commande selon la revendication 6, dans lequel la commande du convertisseur électrique BCSa pour utiliser de l'énergie électrique transitoire en fonction du résultat de l'échange d'informations par le dispositif de commande CCa et la commande du convertisseur électrique BCSb pour utiliser de l'énergie électrique transitoire en fonction du résultat de l'échange d'informations par le dispositif de commande CCb, de sorte que de l'énergie électrique transitoire renvoyée depuis la sous-station de traction TSa ou depuis la sous-station de traction TSb vers le réseau électrique réponde à une exigence prédéfinie, comprennent :
si Pca > 0 et Pcb < 0 et Pca + Pcb = 0, la détermination par les dispositifs de commande CCa et CCb que le réseau de traction OCS est en condition hors charge, l'énergie électrique active Pca et l'énergie électrique active Pcb étant de l'énergie électrique transitoire et circulant actuellement de l'alimentateur de traction Fa1 vers l'alimentateur de traction Fb1 ;
si l'énergie électrique active Pca ≥ Pcbb ≥ 0, la commande du convertisseur électrique BCSb par le dispositif de commande CCb pour alimenter en énergie électrique le bus de système de distribution électrique DSBb ou pour faire fonctionner le dispositif de stockage d'énergie ESDb en état de stockage d'énergie, la somme électrique des deux étant égale à Pca - Pcbb, et simultanément la commande du convertisseur électrique BCSa pour être en veille par le dispositif de commande CCa; si l'énergie électrique active Pcbb ≥ Pca, la commande du convertisseur électrique BCSb pour être en veille par le dispositif de commande CCb et simultanément la commande du convertisseur électrique BCSa pour être en veille par le dispositif de commande CCa;
si Pcb > 0 et Pca < 0 et Pca + Pcb = 0, la détermination par les dispositifs de commande CCa et CCb que le réseau de traction OCS est en condition hors charge, l'énergie électrique active Pca et l'énergie électrique active Pcb étant de l'énergie électrique transitoire et circulant actuellement de l'alimentateur de traction Fb1 vers l'alimentateur de traction Fal;
si l'énergie électrique active Pcb ≥ Pcaa ≥ 0, la commande du convertisseur électrique BCSa par le dispositif de commande CCa pour alimenter en énergie électrique le bus de système de distribution électrique DSBa ou pour faire fonctionner le dispositif de stockage d'énergie ESDa en état de stockage d'énergie, la somme électrique des deux étant égale à Pcb - Pcaa, et simultanément la commande du convertisseur électrique BCSb pour être en veille par le dispositif de commande CCb; si l'énergie électrique active Pcaa ≥ Pcb, la commande du convertisseur électrique BCSa pour être en veille par le dispositif de commande CCa et simultanément la commande du convertisseur électrique BCSb pour être en veille par le dispositif de commande CCb;
si |Pca + Pcb| > 0 et Pca > 0 et Pcb > 0, la détermination par les dispositifs de commande CCa et CCb que le réseau de traction OCS est en condition de traction et la commande du convertisseur électrique BCSa par le dispositif de commande CCa pour faire fonctionner le dispositif de stockage d'énergie ESDa en état déchargé, une énergie électrique de décharge du dispositif de stockage d'énergie ESDa étant inférieure ou égale à Pca, et simultanément la commande du convertisseur électrique BCSb par le dispositif de commande CCb pour faire fonctionner le dispositif de stockage d'énergie ESDb en état déchargé, une énergie électrique de décharge du dispositif de stockage d'énergie ESDb étant inférieure ou égale à Pcb.

10. Procédé de commande selon la revendication 9, dans lequel la commande du convertisseur électrique BCSa pour utiliser de l'énergie électrique transitoire en fonction du résultat de l'échange d'informations par le dispositif de commande CCa et la commande du convertisseur électrique BCSb pour utiliser de l'énergie électrique transitoire en fonction du résultat de l'échange d'informations par le dispositif de commande CCb, de sorte que de l'énergie électrique transitoire renvoyée depuis la sous-station de traction TSa ou depuis la sous-station de traction TSb vers le réseau électrique réponde à une exigence prédéfinie, comprennent:
si Pca < 0 et Pcb < 0, la détermination par les dispositifs de commande CCa et CCb que le réseau de traction OCS est actuellement en condition de freinage;
si Pcaa < 0, la commande du convertisseur électrique BCSa par le dispositif de commande CCa pour alimenter en énergie électrique le bus de système de distribution électrique DSBa ou pour faire fonctionner le dispositif de stockage d'énergie ESDa en état de stockage d'énergie, la somme électrique des deux étant égale à |Pca| + |Pcaa|; si Pcaa > 0 et Pcaa < |Pca|, la commande du convertisseur électrique BCSa par le dispositif de commande CCa pour alimenter en énergie électrique le bus de système de distribution électrique DSBa ou pour faire fonctionner le dispositif de stockage d'énergie ESDa en état de stockage d'énergie, la somme électrique des deux étant égale à |Pca| - |Pcaa|; si Pcaa > 0 et Pcaa ≥ |Pca|, la commande du convertisseur électrique BCSa pour être en veille par le dispositif de commande CCa; et
si Pcbb < 0, la commande du convertisseur électrique BCSb par le dispositif de commande CCb pour alimenter en énergie électrique le bus de système de distribution électrique DSBb ou pour faire fonctionner le dispositif de stockage d'énergie ESDb en état de stockage d'énergie, la somme électrique des deux étant égale à |Pcb| + |Pcbb|; si Pcbb > 0 et Pcbb < |Pcb|, la commande du convertisseur électrique BCSb par le dispositif de commande CCb pour alimenter en énergie électrique le bus de système de distribution électrique DSBb ou pour faire fonctionner le dispositif de stockage d'énergie ESDb en état de stockage d'énergie, la somme électrique des deux étant égale à |Pcb| - |Pcbb|; si Pcbb > 0 et Pcbb ≥ |Pcb|, la commande du convertisseur électrique BCSb pour être en veille par le dispositif de commande CCb.
